# EUROPÄISCHE PATENTSCHRIFT

(11) **EP 0 401 563 B1**
(45) Veröffentlichungstag und Bekanntmachung des Hinweises auf die Patenterteilung: **02.03.1994**
(21) Anmeldenummer: 90109176.9
(22) Anmeldetag: 16.05.1990
(51) Int. Cl.: H02P 8/00

(54) **Verfahren zur Ansteuerung eines Schrittmotors**
Method for driving a stepping motor
Méthode pour commander un moteur pas-à-pas

(30) Priorität: 07.06.1989 DE 3918538
(43) Veröffentlichungstag der Anmeldung: 12.12.1990
(73) Patentinhaber: ROBERT BOSCH GMBH, 70442 Stuttgart (DE)
(72) Erfinder: Bonss, Rainer, D-8541 Büchenbach bei Roth (DE)

(56) Entgegenhaltungen:
- EP-A- 0 064 391
- DE-A- 2 737 372
- DE-A- 3 302 209

## Beschreibung

### Stand der Technik

Die Erfindung geht aus von einem Verfahren zur Ansteuerung eines Schrittmotors nach der Gattung des Hauptanspruchs.

Bekannte Steuerschaltungen für einen Schrittmotor bewirken, daß sich der Anker des Schrittmotors nicht kontinuierlich dreht, sondern entsprechend der vorgegebenen Schrittzahl von Schritt zu Schritt sprunghaft fortbewegt.

Dabei wird zu Beginn eines Schrittes der Anker durch einen Stromimpuls beschleunigt und bei Erreichen der entsprechenden Schrittposition abgebremst. Die Beschleunigung erfolgt nahezu sprunghaft, wenn von Reibungs- und Massenträgheitskräften abgesehen wird. Dieser Vorgang wiederholt sich bei jedem Schritt, bis die von der Steuerschaltung vorgegebene Schrittzahl erreicht ist.

Bei einer derartigen Steuerung eines Schrittmotors ergibt sich ein vibrierender und unruhiger Lauf des Schrittmotors.

Aus dem Datenblatt TA 8435H der Fa. Toshiba ist das Blockschaltbild einer integrierten Schaltung bekannt, die zur Steuerung eines Drehschritts des Ankers eine als Treppenfunktion ausgebildete Impulsfolge abgibt, die in etwa den Verlauf einer Sinushalbwelle aufweist. Die Umwandlung in die Treppenfunktion erfodert viele Mikroschritte, mit denen dann der Anker langsam beschleunigt bzw. abgebremst wird. Diese Schaltung ist sehr aufwendig und daher für einfache Anwendungen zu teuer.

Aus der DE 33 02 209 A1 ist ein Schrittmotor bekannt, bei dem zum Weiterschalten des Ankers um einen Schritt dieser mit einer Impulsfolge von Stromimpulsen angesteuert wird. Um die Aufgabe zu lösen, bei netzunabhängigem Betrieb den Energieverbrauch zu senken, werden die Spulen des Schrittmotors mit Stromimpulsen angesteuert, deren Länge sukzessiv zunimmt. Dabei wird zwar auch eine ruckfreie Beschleunigung des Ankers des Schrittmotors bewirkt. Sie ist allerdings nicht abgestimmt auf die Hassenträgheit des Ankers, so daß sich hohe Beschleunigungswerte ergeben können. Dadurch kann der Schrittmotor ungewünschte Laufgeräusche abgeben.

Aus der EP 0 064 391 A1 ist ein Verfahren und ein Gerät zur Steuerung eines Schrittmotors bekannt, der besonders für die Steuerung eines Diskettenlaufwerkes vorgeschlagen wird. Der Schrittmotor wird zur Steuerung des Schreib-/Lesekopfes des Diskettenlaufwerkes verwendet und soll ein Überschwingen des Schreib-/Lesekopfes beim Aufsuchen einer vorgegebenen Spur verhindern. Das wird dadurch erreicht, daß der Schreib-/Lesekopf zunächst durch Stromimpulse derart angesteuert wird, daß er mit hoher Geschwindigkeit in die Nähe der gesuchten Spur fährt. Der letzte Stromimpuls wird dann in viele Einzelimpulse aufgeteilt, um ein langsames Herantasten zur gesuchten Spur zu ermöglichen und damit ein Überschwingen auf eine Nachbarspur vermieden wird. Da es beim Beschreiben oder Auslesen einer Diskette in der Regel darum geht, die gespeicherten Daten möglichst rasch auszulesen, um unnötige Wartezeiten des angeschlossenen Computers zu vermeiden, spielen die dabei entstehenden Laufgeräusche des Schrittmotors keine wesentliche Rolle. Wegen der gewünschten kurzen Zugriffszeit zu den Daten ist es sogar ausgesprochen gewünscht, die größtmögliche Suchgeschwindigkeit des Schreib-/Lesekopfes zu wählen, wobei als wesentliche Bedingung angesehen wird, daß die gewünschte Position exakt gefunden wird, um das Aus lesen von falschen Daten zu vermeiden. Die Vorgabe einer begrenzten Drehgeschwindigkeit im Zusammenhang mit einer ruckfreien Drehbewegung ist jedoch nicht vorgesehen.

### Vorteile der Erfindung

Das erfindungsgemäße Verfahren zur Ansteuerung eines Schrittmotors mit den kennzeichnenden Merkmalen des Hauptanspruchs hat demgegenüber den Vorteil, daß durch die Anpassung der Stromimpulse bzw. deren Länge auf die Massenträgheit des Systems eine gewünschte Beschleunigung oder Drehgeschwindigkeit eingestellt werden kann. Dadurch wird ein ruhiger Motorlauf erreicht, der insbesondere beim Antrieb eines Zeigers eines Anzeigegerätes gewünscht ist.

Durch die in den Unteransprüchen aufgeführten Maßnahmen sind vorteilhafte Weiterbildungen und Verbesserungen des im Hauptanspruch angegebenen Verfahrens möglich.

Als besonderer Vorteil ist anzusehen, daß mit einer konstanten Spannungsamplitude für die Stromimpulse sich ein besonders einfacher Aufbau für die Ansteuerschaltung ergibt.

Der Schrittmotor ist besonders günstig bei einem Anzeigegerät zu verwenden, da einerseits seine Meßwerte sehr genau anzuzeigen sind und andererseits der Zeiger ruckfrei fortbewegt werden soll.

Weitere Vorteile und Verbesserungen der Erfindung sind der Beschreibung entnehmbar.

### Zeichnung

Ein Ausführungsbeispiel der Erfindung ist in der Zeichnung dargestellt und in der nachfolgenden Beschreibung näher erläutert. Es zeigen Figur 1 einen Schrittmotor für ein Anzeigegerät, Figur 2 ein erstes Stromlaufdiagramm, Figur 3 ein zweites Stromlaufdiagramm, Figur 4 ein Blockschaltbild, Figur 5 und 6 je eine Codetabelle und Figur 7 ein Flußdiagramm.

### Beschreibung des Ausführungsbeispiels

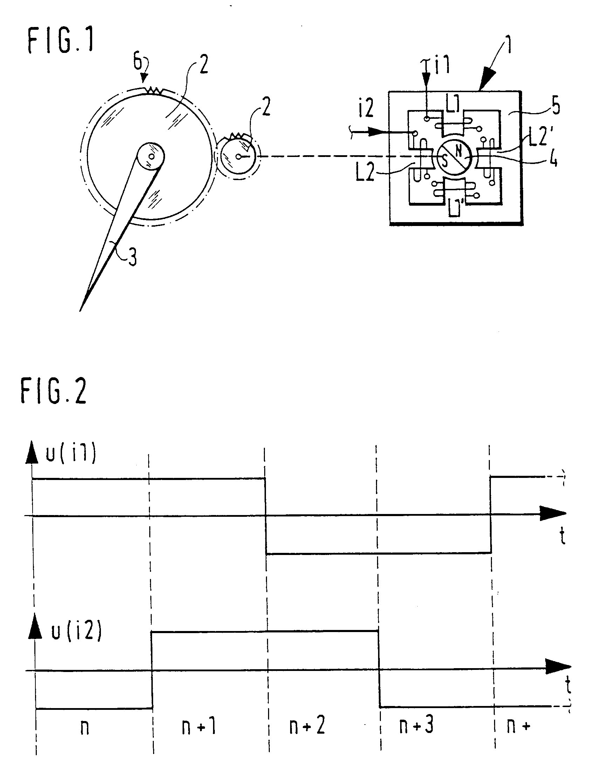

In Figur 1 ist ein Schrittmotor 1 für ein Anzeige-gerät 6 dargestellt, auf dessen Eisenkern zwei um 90° versetzte Spulenpaare L1 - L1′ und L2 - L2′ angeordnet sind. Die Spulenpaare werden von den Strömen i1 und i2 gespeist, so daß deren Magnetfelder den Anker 4 in eine Drehbewegung versetzen. Der Anker 4 ist mechanisch mit einem Getriebe 2 verbunden, durch das der Zeiger 3 des Anzeige-gerätes 6 angetrieben wird.

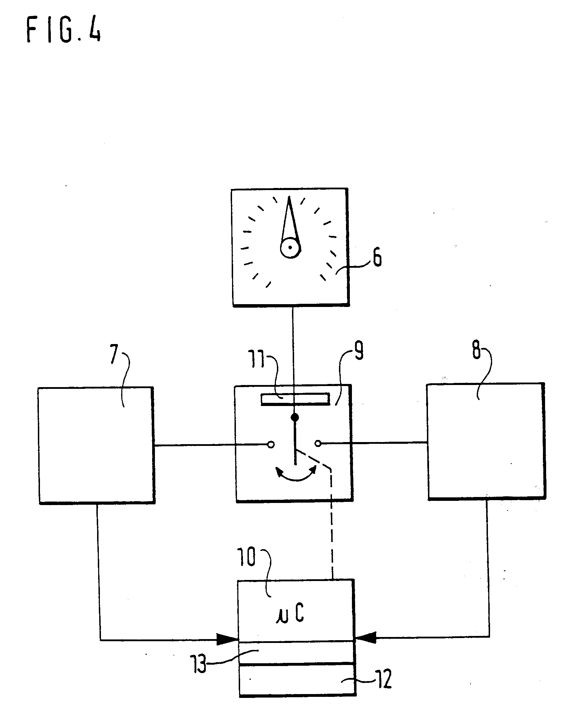

In Figur 4 ist das Blockschaltbild des Ausführungsbeispiels dargestellt. Es zeigt ein Anzeige-gerät 6 mit einem Schrittmotor, das über einen Umschalter 9 mit einem ersten Steuercodespeicher 7 und einem zweiten Steuercodespeicher 8 verbunden ist. Die Steuercodespeicher 7, 8 wie auch der Umschalter 9 werden von einer Steuerungsschaltung 10 gesteuert.

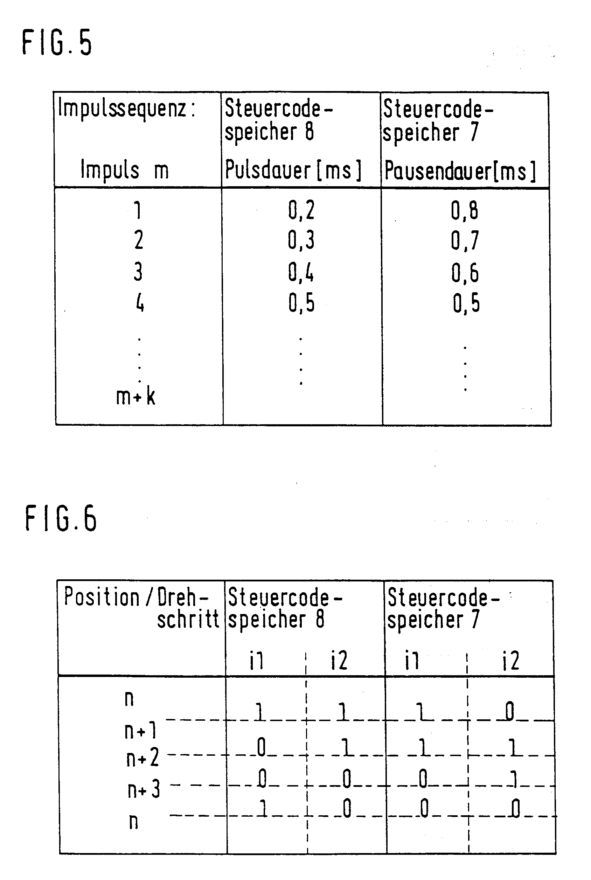

Die Steuerschaltung 10 enthält als zentrales Steuerelement einen Mikrocomputer uC mit einem Speicher und einem Taktgeber 13. In dem Speicher sind eine oder mehrere Codetabellen abgelegt, die gemäß Figur 5 Zeitinformationen zur Erstellung einer Pulssequenz enthalten.

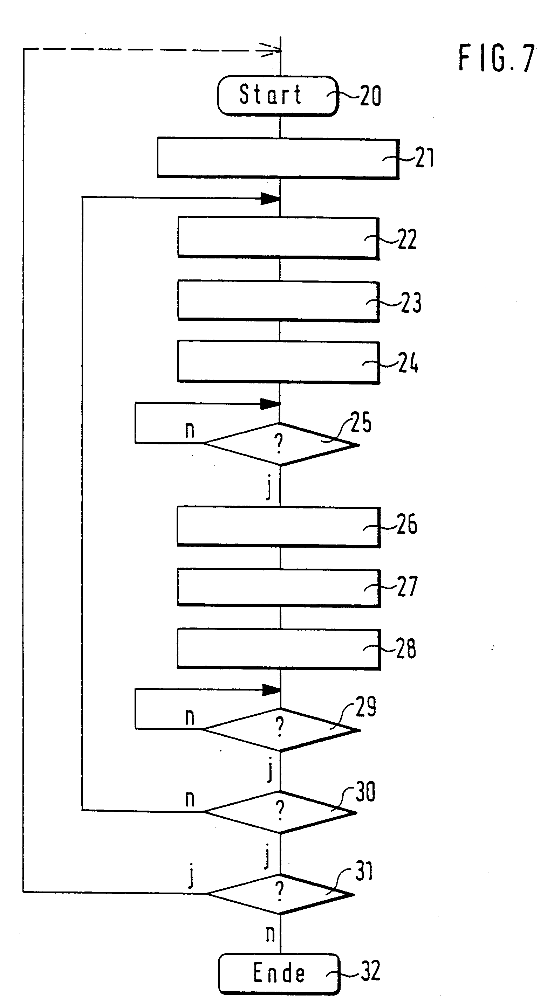

Der Microcomputer wird von einem Programm gesteuert,dessen Flußdiagramm in Figur 7 dargestellt ist.

Die Steuercodespeicher 7,8 enthalten ebenfalls Codetabellen, jedoch nicht mit Zeitinformationen, sondern mit logischen Steuercodes für den Schrittmotor, die von der Steuereinheit 10 auslesbar sind.

Die Stromversorgungen i1,i2 sind als Treiberstufen 11 im Umschalter 9 enthalten. Der Umschalter 9 enthält für den vierpoligen Motor vier Umschaltkontakte, von denen aus Gründen der Übersichtlichkeit nur ein Kontakt dargestellt ist ( Figur 4). Die Anzahl der Kontakte richtet sich nach dem Motortyp ebenso wie die gespeicherten Codes der Codetabellen. Die Kontakte sind als prellfreie Schalter ausgebildet, um keine Störimpulse zu erzeugen.

Im folgenden wird die Wirkungsweise dieser Schaltungsanordnung beschrieben.

In Figur 2 ist der prinzipielle Stromverlauf dargestellt, mit dem der Anker 4 des Schrittmotors 1 angetrieben wird. Auf der Zeitachse t ist sowohl der Strom i1 als auch der Strom i2 aufgetragen. Aus diesen Diagrammen ist ersichtlich, daß der auf den Anker 4 wirksame Summenstrom i1 + i2 sich bei jedem Schritt sprunghaft ändert. Beispielsweise ändert sich der Strom i2 sprunghaft von 'low' auf 'high' beim Schritt n auf n+1, während sich beim Schritt n+1 auf n+2 der Strom i1 sprunghaft von 'high' auf 'low' ändert. Dies ergibt eine ruckartige Fortbewegung des Ankers.

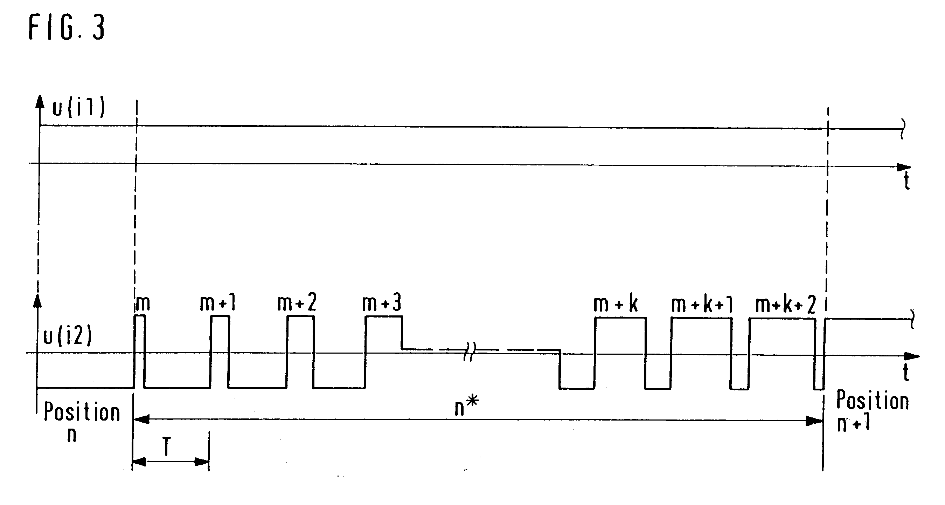

Um den Anker 4 sanft zu beschleunigen, bzw. abzubremsen, wird erfindungsgemäß vorgeschlagen, die Stromansteuerung gemäß den in Figur 3 dargestellten Stromkennlinien durchzuführen. Soll beispielsweise der Anker 4 um einen Schritt von der Position n auf die Position n+1 fortbewegt werden, dann wird der Strom i1 bzw. i2 nicht sprunghaft umgeschaltet. Stattdessen wird gewissermaßen als Zwischenschritt n* eine Pulssequenz von m+k Stromimpulsen auf die betreffende Ankerspule gegeben. Dabei wird das Tastverhältnis Impuls/Pause von Impuls zu Impuls vergrößert.

In der Figur 3 ist beispielsweise der Strom i1 konstant und der Strom i2 zunächst auf seinem negativen Grenzwert. Der Anker beharrt in seiner jetzigen Position, solange sich keiner der beiden Ströme ändert. Ändert sich der Strom i2 dadurch, daß die Spule L2 durch kurzzeitige Stromimpulse m aufgeladen wird, dann wird der Anker 4 mit zunehmender Pulslänge beschleunigt, bis er sich schließlich um einen Schritt weitergedreht hat. Für weitere Schritte wiederholt sich diese Pulssequenz entsprechend. Die Anzahl der Stromimpulse m kann beliebig variiert werden. Es hat sich als günstig erwiesen, die Pulszahl bzw. deren Länge auf das Massenträgheitssystem des Antriebs abzustimmen. Hat das Antriebssystem beispielsweise eine große Massenträgheit, dann genügen wenige, lange Stromimpulse, um das Antriebssystem ruckfrei zu beschleunigen. Ist dagegen die Massenträgheit klein, dann wird man sehr viele Stromimpulse wählen, die fein abgestuft mit hoher Frequenz geschaltet werden.

Im Schritt n+1 ist die Drehbewegung des Ankers bereits wieder zu Null geworden. Das ist darin begründet, daß der Anker mit zunehmendem Tastverhältnis bereits abgebremst wird, so bald das Tastverhältnis größer als 50 % wird. Bis zu einem Tastverhältnis von 50 % wird der Anker beschleunigt. Insgesamt ergibt sich damit ein weicher und ruhiger Lauf des Motors 1. Ist an den Anker 4 gemäß Figur 1 ein Untersetzungsgetriebe 2 mit einem Zeiger 3 eines Anzeigegerätes angeschlossen, dann wird dieser Zeiger ruckfrei fortbewegt. Die Drehrichtung des Zeigers 3 bzw. des Ankers 4 wird durch das Drehfeld bestimmt, das durch die Ströme i1 und i2 gebildet wird.

Die Sequenz mit den veränderlichen Stromimpulsen m wird beispielsweise durch die in der Steuerschaltung 10 abgelegte Codetabelle 12 gebildet. Gemäß Figur 5 enthält die Codetabelle beliebige Zeitangaben für die Pulsdauer und Pausendauer. In diesen Zeittakten wird der Umschalter 9 alternierend vom Steuercodespeicher 7 zum Steuercodespeicher 8 umgeschaltet. Ist beispielsweise der Steuercodespeicher 7 aktiviert, dann wird dessen Steuercodetabelle ausgelesen. Diese Codetabelle ist in Figur 6 dargestellt. Sie enthält die Steuercodes für die Ansteuerung der Treiberstufen 11, deren Ströme i1,i2 die einzelnen Spulen L1-L1′ bzw. L2-L2′ in der Pausenphase versorgen. In der Codetabelle bedeutet "1", daß der Strom positiv gerichtet und "0", daß der Strom negativ gerichtet ist.

Soll der Anker von der Position n auf n+1 bewegt werden, dann bleibt gemäß der Figur 2 der Strom i1 positiv, während der Strom i2 zunächst negativ ist. Für den ersten Stromimpuls m (vgl Figur 3 ) wird zunächst der Steuercodespeicher 8 für die Dauer vom 0,2 ms positiv (Figur 5 und 6). Jetzt wird dessen Steuercode ausgelesen, d.h. beide Ströme i1,i2 sind positiv geschaltet. Danach schaltet der Umschalter 9 für die Dauer der Pausenzeit ( z. B. 0,8 ms ) auf den Steuercodespeicher 7 um. Nun wird die Codetabelle des Steuercodespeichers 7 ausgelesen , d. h. der Strom i2 wird negativ geschaltet. Danach kann der nächste Stromimpuls m+1 angesteuert werden, indem wieder auf den Steuercodespeicher 8 umgeschaltet wird u.s.w. Dieses wiederholt sich, bis die Impulssequenz abgearbeitet ist. Nach der letzten Impulspause steht der Anker in der Position n+1. Es werden soviele Schritte durchgeführt bis der einem Meßwert entsprechende Ausschlag auf der Skala des Anzeigegerätes 6 erreicht ist.

Die Periodendauer der Pulssequenz kann in Abhängigkeit von der Drehzahl und/oder der Massenträgheit des Systems einstellbar sein. Die gespeicherten Steuercodes sind auf den Motortyp abgestimmt und den Betriebsbedingungen anpaßbar.

Der funktionelle Ablauf des Steuerprogramms für die Steuerschaltung 10 ist aus dem Flußdiagramm der Figur 7 ersichtlich. Nach dem Start (Position 20) des Schrittmotors 1 wird die Impulssequenz (Position 21) dadurch gestartet, daß der Codespeicher 12 für die Zeittakte ausgelesen wird (Position 22). Anschließend wird gemäß Position 23 der Umschalter 9 auf den Steuercodespeicher 8 für die Erzeugung des ersten Stromimpulses geschaltet. In Position 24 wird dessen Codetabelle ausgelesen und die entsprechenden Ströme i1,i2 über die Treiberstufen 11 geschaltet. Das Programm verharrt in Positon 25 solange, bis der Zeittakt für den Stromimpuls abgelaufen ist. Anschließend wird aus dem Codespeicher 12 die Pausendauer ausgelesen (Position 26), der Umschalter 9 auf den Steuercodespeicher 7 umgeschaltet (Position 27) und die Treibestufen 11 entsprechend dem Steuercode geschaltet (Position 28). Das Programm stoppt in Positon 29 solange, bis der Zeittakt für die Pausendauer abgelaufen ist. Nach Ablauf der ersten Pulsperiode wird in Position 30 abgefragt, ob die Impulssequenz beendet ist. Ist dies nicht der Fall, dann wird auf Position 22 zurückgesprungen, um eine neue Taktzeit einzustellen. Diese Schleife wird so oft durchlaufen, bis die Impulssequenz mit den Zwischenschritten abgearbeitet ist und der Anker in Position n+1 steht (Position 30).

Weitere Drehschritte des Ankers werden in Position 31 abgefragt und das Programm gegebenenfalls in Pos. 20 wieder gestartet. In Position 32 ist das Programm beendet.

In weiterer Ausgestaltung der Erfindung ist vorgesehen, beliebig kleine Zwischenschritte des Ankers vorzusehen. Da der Anker sich bei jedem Impuls m ein Stück weiterbewegt, wird der Zeiger 3 des Anzeigegerätes 6 eine stabile Lage einnehmen, wenn der Impuls m gleichförmig wiederholt wird. In diesem Fall liest die Steuerschaltung 10 die Impuls-/Pausenzeiten des Impulses m ständig aus der Codetabelle ( Figur 5) aus und schaltet den Umschalter 9 entsprechend häufig um.

Auch ist vorgesehen, die Zeitdauer der Pulssequenz dem Massenträgheitssystem des Antriebs anzupassen. Die Einstellung der Beschleunigung des Ankers erfolgt durch die Wahl der Pulslänge eines Einzelimpulses m. Bei einer großen Pulslänge ergibt sich damit eine starke Beschleunigung des Ankers, bei einer kurzen Pulslänge wird die Beschleunigung des Ankers entsprechend klein sein.

## Patentansprüche

1. Verfahren zum Ansteuern eines Schrittmotors mit einer Steuerschaltung, die den Schrittmotor schrittweise in eine Drehbewegung versetzt, wobei die Steuerschaltung für einen Drehschritt des Ankers (4) eine Sequenz von Steuerimpulsen (m) liefert, bei der das Tastverhältnis Impuls/Pause einer Periode (T) von Impuls zu Impuls vergrößert wird, dadurch gekennzeichnet, daß die Anzahl der Stromimpulse (m) bzw. deren Länge in der Sequenz in Abhängigkeit von der Massenträgheit eines Systems (1, 6) dadurch bestimmt wird, daß bei einer großen Massenträgheit wenige, lange und umgekehrt bei einer kleinen Massenträgheit sehr viele, fein abgestufte Stromimpulse mit hoher Frequenz auf die Spulen (L1, L2) des Schrittmotors (1) geschaltet werden.

2. Verfahren nach Anspruch 1, dadurch gekennzeichnet, daß die Spannungsamplitude für die Stromimpulse (i1, i2) konstant ist.

3. Verfahren nach einem der vorgehenden Ansprüche, dadurch gekennzeichnet, daß die Anzahl der Impulse (m), die zur Ausführung eines Drehschrittes erforderlich sind, in Abhängigkeit von der Drehgeschwindigkeit des Ankers (4) vorgebbar ist.

4. Verfahren nach Anspruch 1, dadurch gekennzeichnet, daß ein Anker (4) des Schrittmotors zum Antrieb mit einem Zeiger (3) eines Anzeigegerätes (6) mechanisch drehbar verbunden ist.

## Claims

1. Method for driving a stepping motor with a control circuit which, step by step, imparts a rotational movement to the stepping motor, the control circuit supplying, for one rotational step of the armature (4), a sequence of control pulses (m) in which the mark-to-space duty factor of one period (T) is increased from pulse to pulse, characterized in that the number of current pulses (m) or their length in the sequence is determined in dependence on the inertia of the mass of a system (1, 6) due to the fact that a few long current pulses are connected to the coils (L1, L2) of the stepping motor (1) with high mass inertia and, conversely, a large number of finely graded current pulses are connected at high frequency to the coils (L1, L2) of the stepping motor (1) in the case of low mass inertia.

2. Method according to Claim 1, characterized in that the voltage amplitude for the current pulses (i1, i2) is constant.

3. Method according to one of the preceding claims, characterized in that the number of pulses (m) which are required for carrying out one rotational step can be predetermined in dependence on the rotational speed of the armature (4).

4. Method according to Claim 1, characterized in that an armature (4) of the stepping motor is mechanically rotatably connected to a pointer (3) of an indicating instrument (6) for driving purposes.

## Revendications

1. Méthode de commande d'un moteur pas-à-pas au moyen d'un circuit de commande faisant tourner le moteur pas-à-pas en délivrant, pour un pas à effectuer par l'induit (4), une séquence d'impulsions (m) dans laquelle le rapport des durées d'impulsion et de pause dans une période (T), croît d'une impulsion à la suivante, caractérisée en ce que le nombre des impulsions de courant (m) ou leurs durées, dans la séquence est (sont) déterminé(es) en fonction de l'inertie d'un système (1, 6) de sorte qu'à une grande inertie correspond un petit nombre d'impulsions longues envoyées aux bobines (L1, L2) du moteur pas-à-pas (1) tandis qu'inversement, à une faible inertie correspond un grand nombre d'impulsions finement étagées à fréquence élevée.

2. Méthode de commande selon la revendication 1, caractérisée en ce que l'amplitude de la tension des impulsions de courant (i1, i2) est constante;

3. Méthode de commande selon une des revendications précédents, caractérisée en ce que le nombre des impulsions (m) nécessaires à une rotation d'un pas peut être imposé d'avance en fonction de la vitesse de l'induit (4).

4. Méthode de commande selon la revendication 1, caractérisée en ce qu'un induit (4) du moteur pas-à-pas est relié mécaniquement en rotation à une aiguille (3) d'un appareil indicateur (6).
